Europäisches Patentamt

European Patent Office

Office européen des brevets

(11) Numéro de publication: **0 078 718**
**A1**

# DEMANDE DE BREVET EUROPEEN

(21) Numéro de dépôt: **82401718.0**

(22) Date de dépôt: **22.09.82**

(51) Int. Cl.³: **F 16 D 3/40**

(30) Priorité: **29.10.81 FR 8120292**

(43) Date de publication de la demande: **11.05.83**
**Bulletin 83/19**

(84) Etats contractants désignés: **BE DE GB IT NL SE**

(71) Demandeur: **CYCLES PEUGEOT Société dite:, Beaulieu,
F-25700 Valentigney (FR)**

(72) Inventeur: **Grospelier, Gérard, 15 Rue du Maquis du
Lomont, F-25200 Montbeliard (FR)**

(74) Mandataire: **Polus, Camille et al, c/o Cabinet
Lavoix 2, Place d'Estienne d'Orves, F-75441 Paris
Cedex 09 (FR)**

(54) **Fourche d'articulation à la cardan.**

(57) La fourche (4) est formée par l'extrémité de l'arbre
tubulaire à relier (1), qui a été fendue et dont les deux
parties (15, 16) ont été écartées l'une de l'autre. Un trou
(8) est percé dans chacune des branches (15, 16), les deux
trous étant coaxiaux. Lors de l'assemblage d'un joint de
cardan une seconde fourche (6), également d'une seule
pièce avec l'arbre tubulaire (3), est reliée à la première
par un croisillon de cardan.

EP 0 078 718 A1

---

Fourche d'articulation à la cardan.-

Les joints, ou autres articulations à la cardan, destinés à permettre de transmettre un mouvement de rotation entre un arbre et un autre organe, qui peut être un autre arbre, comportent de manière classique deux mâchoires ou fourches, entre lesquelles est inséré un croisillon, et qui sont rapportées chacune sur l'un des organes à relier.

La réalisation de telles articulations nécessite, par suite, la fabrication et l'usinage précis, puis l'assemblage de plusieurs pièces, ce qui souvent entraîne un prix de revient relativement élevé.

La présente invention a pour but de remédier à cela en fournissant une fourche facile à réaliser, sans opérations complexes d'usinage ni d'assemblage.

Cette invention a en effet pour objet une fourche d'articulation qui est formée par l'extrémité de l'arbre tubulaire à relier, qui a été fendue et dont les deux parties ont été écartées l'une de l'autre et percées chacune d'un trou, les deux trous étant coaxiaux. La fourche est ainsi d'une seule pièce avec l'arbre tubulaire, ce qui supprime toute nécessité d'assemblage. Elle est en outre réalisée de manière simple et sans usinage précis.

De préférence la fente de formation de la fourche est pratiquée dans une extrémité du tube dont la paroi est plus épaisse que celle du reste du tube.

L'invention s'étend également à un joint de cardan constitué par deux fourches formées dans les extrémités des deux arbres à relier, mais ayant une largeur supérieure au diamètre de ces arbres et un croisillon de cardan inséré dans deux trous coaxiaux de chacune des fourches.

La description ci-dessus d'un mode de réalisation donné à titre d'exemple non limitatif, et représenté aux dessins annexés, fera d'ailleurs ressortir les avantages

2

et caractéristiques de l'invention.

Sur ces dessins :

- la fig. 1 est une vue en perspective d'un joint de cardan selon l'invention;

- la fig. 2 est une vue de côté de l'extrémité d'un tube à relier, avant la formation de la fourche;

- la fig. 3 est une vue de côté d'une fourche selon l'invention, assemblée dans un joint de cardan.

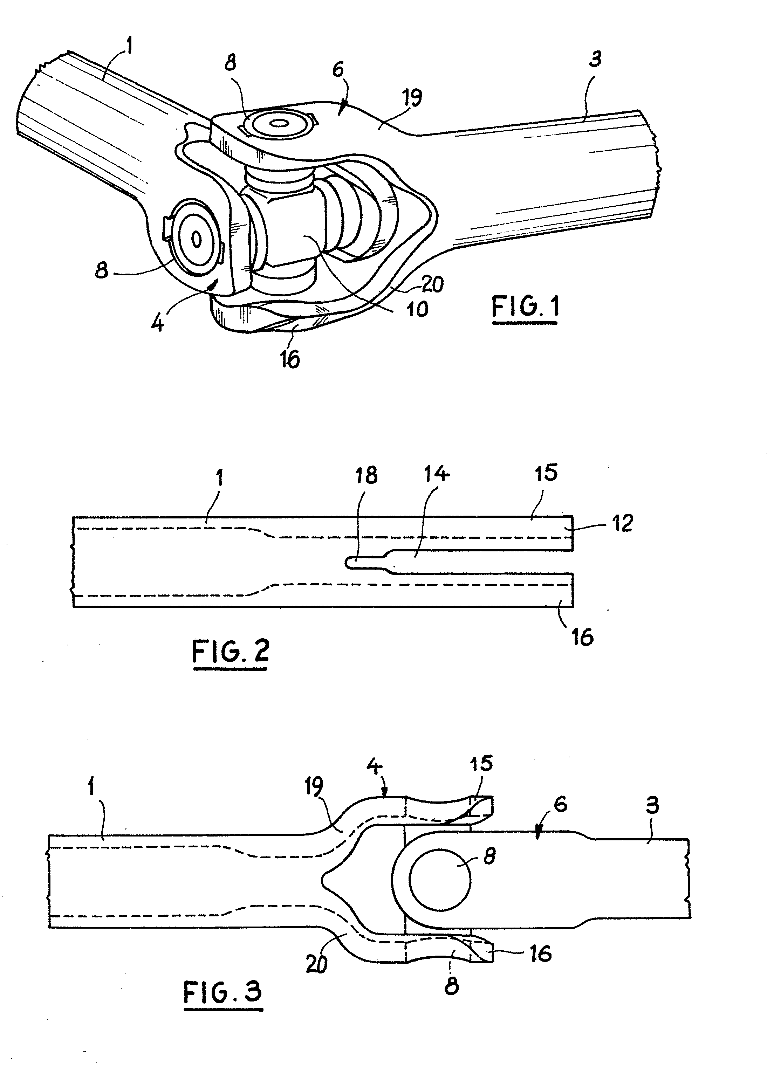

Le joint de cardan représenté sur la figure 1 relie deux arbres tubulaires, respectivement 1 et 3, qui sont terminés chacun par une fourche, respectivement 4 et 6, d'une seule pièce avec lui. Ces arbres 1 et 3 sont en effet terminés par une partie évasée qui se sépare en deux branches sensiblement planes et parallèles l'une à l'autre, et écartées d'une distance supérieure au diamètre de l'arbre 1 ou 3 correspondant. Chacune des branches de la fourche 4 ou 6 ainsi formée est percée d'un trou 8, d'axe perpendiculaire à l'arbre, les deux trous de la même fourche étant coaxiaux.

Dans les trous 8 des deux fourches est inséré un croisillon 10 qui complète l'articulation.

Chacune des fourches 4 et 6 est formée dans un tube dont l'extrémité présente, de préférence, une épaisseur de paroi supérieure à celle de l'ensemble du tube, comme le montre la figure 2. Cette partie plus épaisse 12 est fendue longitudinalement en 14, de façon à être séparée en deux parties ou branches, respectivement 15 et 16.

De préférence la fente 14 est terminée à son extrémité interne par une partie de moindre largeur, 18.

Les branches 15 et 16 sont ensuite écartées l'une

- 3 -

de l'autre radialement, de sorte que leurs portions extrêmes libres sont déplacées vers l'extérieur parallèlement à elles-mêmes et que leurs portions 19,20 de jonction au tube s'inclinent progressivement. Les fentes 14 s'élargissent jusqu'à permettre le passage d'une branche d'une autre fourche de forme analogue. Les branches constituent alors une fourche telle que la fourche 4 représentée sur la figure 3, dont la largeur est nettement supérieure au diamètre extérieur du tube 1 dans lequel elle a été formée.

Deux trous 8, diamétralement opposés et coaxiaux sont alors percés dans les branches 15 et 16 et la fourche 4 est prête à être assemblée avec une fourche analogue 6 au moyen du croisillon 10 pour former un joint de cardan.

Bien entendu la fourche 4 ou 6 pourrait également être montée dans une autre articulation et être associée, par l'intermédiaire du croisillon 10, à une fourche d'un autre type.

Dans tous les cas la fourche 4 ou 6 est réalisée sans usinage particulier et ne nécessite aucun assemblage avec l'arbre tubulaire. Ni expansion du tube ni découpe dans une paroi tubulaire ne sont nécessaires.

Par ailleurs, les fentes de même que l'opération d'écartement radial peuvent aisément être pratiquées sur un tube d'épaisseur relativement importante ayant même une épaisseur suffisante pour supporter le croisillon, sans l'adjonction d'aucune pastille ou autre élément rapporté. Ce qui simplifie la réalisation en augmentant la résistance.

4

- <u>REVENDICATIONS</u> -

1 - Fourche d'articulation à la cardan, caractérisée en ce qu'elle est formée par l'extrémité de l'arbre tubulaire (1, 3) à relier, qui a été fendue (en 14) et dont les deux parties (15, 16) ont été écartées l'une de l'autre puis percées chacune d'un trou (8), les deux trous étant coaxiaux.

2 - Fourche suivant la revendication 1, caractérisée en ce que la fente (14) de formation de la fourche est pratiquée dans une extrémité du tube (1, 3) dont la paroi est plus épaisse que celle du reste du tube.

3 - Fourche suivant l'une des revendications 1 et 2, caractérisée en ce que la fente (14) est prolongée à son extrémité interne par une portion (18) de plus faible largeur.

4 - Joint de cardan reliant deux arbres tubulaires, caractérisé en ce qu'il est constitué par deux fourches (4, 6) formées dans les extrémités des deux arbres (1,3) à relier, mais ayant une largeur supérieure au diamètre de ces arbres, et un croisillon de cardan (10) inséré dans deux trous coaxiaux (8) de chacune des fourches.

5. Procédé de réalisation d'une fourche d'articulation selon l'une quelconque des revendications 1 à 3, caractérisé en ce qu'il consiste à pratiquer deux fentes longitudinales diamétralement opposées dans l'extrémité du tube puis à écarter radialement les portions extrêmes de ces fentes parallèlement à elles-mêmes pour former deux branches de fourche (15,16) puis à percer dans les portions extrêmes parallèles à ces branches deux trous coaxiaux (8).

6. Procédé suivant la revendication 5, caractérisé en ce que les fentes sont pratiquées dans une extrémité du tube dont l'épaisseur est suffisante pour former palier à support d'un croisillon.

0078718

**FIG.1**

**FIG.2**

**FIG.3**

Office européen
des brevets

**RAPPORT DE RECHERCHE EUROPEENNE**

0078718

Numéro de la demande

EP 82 40 1718

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | FR-A- 913 748 (HARDY SPICER)<br>* En entier * | 1,4,5 | F 16 D 3/40 |
| Y | | 2,3,6 | |
| Y | FR-A-2 389 038 (UNION CARBIDE)<br>* En entier * | 2,6 | |
| Y | US-A-2 264 727 (STILL WAGON)<br>* Figures 1,2 * | 2,3,6 | |
| A | FR-A-2 204 256 (EHRENREICH) | | |
| A | US-A-1 583 184 (SANDBERG) | | DOMAINES TECHNIQUES RECHERCHES (Int. Cl. 3) |
| A | FR-A-2 343 161 (NADELLA) | | F 16 D 3/00<br>B 21 D 53/00 |
| A | FR-A-2 181 318 (PITNER et NADELLA) | | |

Le présent rapport de recherche a été établi pour toutes les revendications

| Lieu de la recherche | Date d'achèvement de la recherche | Examinateur |
|---|---|---|
| LA HAYE | 05-01-1983 | BALDWIN D.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

BAD ORIGINAL